# EUROPEAN PATENT APPLICATION

(11) **EP 1 331 590 A2**
(43) Date of publication of application: **30.07.2003**
(21) Application number: 03250453.2
(22) Date of filing: 24.01.2003
(51) Int. Cl.: G06K 7/00, G06K 17/00

(54) **Apparatus and method for locating an RFID transponder**

(30) Priority: 25.01.2002 US 57036
(71) Applicant: Texas Instruments Incorporated, Dallas, Texas 75251 (US)
(72) Inventor: Barink, Bernard, Columbia, MD 21045 (US)
(74) Representative: Legg, Cyrus James Grahame

(57) **Abstract**

Apparatus and methods for locating an RFID transponder (60,62) in space is described. The invention includes an RFID transponder for broadcasting identification data and a plurality of antennae (14,20,26) for receiving identification data broadcast by the RFID transponder. The plurality of antennae are associated with the plurality of support members or shelves (12,18,24) and control circuitry connected to the plurality of antenna determines which of the plurality of antennae receives identification information broadcast from the RFID transponder to determine the location of the transponder.

## Description

### Field of the Invention

The present invention relates to the use of RFID transponders, and more specifically, to locating or finding a specific product or package carrying or incorporating an RFID transponder having a unique identification number and that is stored on a plurality of vertically and/or horizontally spaced shelves. Each of the shelves having at least one loop antenna for interrogating RFID transponders.

### Background of the Invention

RFID transponders are now being used extensively for inventory control, products and packaging in commercial settings. The available transponders include complex battery powered and long range expensive transponders which may be attached to valuable one-of-a-kind products, products which are limited in number, or products which are so expensive (of the order of hundreds or thousands of dollars) that they can justify substantial costs for protection. Such higher end transponders may be part of a theft protection system which actually contacts a police type monitoring service and/or which cooperates with some type of positioning system, such as for example, GPS (Global Positioning Satellite). Such positioning systems provide a continuous indication of the transponder's location, and of course, the product to which the transponder is attached. At the other end of the spectrum are the inexpensive (cost per transponder in pennies or less) tuned antennas routinely attached to packages or products in department stores that will set off an alarm if a customer passes through or is in close proximity to a detector usually positioned at an exit. These antennas are all substantially identical and cannot provide a unique identification code.

The present invention, however, is primarily for use with an RFID transponder that provides unique identification codes for each transponder in the same manner as the more expensive transponders. At the same time, these transponders do not require a battery or other power supply, and the cost is in the range of about $1.00 per transponder or less. Transponders specifically suited for use with this invention are available from Texas Instruments Incorporated under the trade name TIRIS®. One such transponder is described in U.S. Patent 5,053,774 to Josef H. Schuermann, and assigned to Texas Instruments.

According to one embodiment, a suitable transponder for use with this invention will absorb sufficient energy from an interrogating antenna to allow the transponder to transmit the necessary identifying information or codes. In addition, the transponder should also operate satisfactorily when there are more than one interrogating antennas. Once example of a transponder interrogation protocol for use in a multi-interrogator field is discussed in U.S. Patent 5,646,607 also issued to Schuermann, et al., and assigned to Texas Instruments. U.S. Patent 5,729,236 issued to Thomas J. Flaxal and assigned to Texas Instruments discloses a related patent entitled "Identification System Reader with Multiplexed Antennas." Similarly, U.S. Patent 5,294,931 issued to H. Meier and assigned to Texas Instruments discloses a "Method of interrogating a Plurality of Transponders Arranged in the Transmission Range of an Interrogating Device."

As will also be appreciated by those skilled in the art, if there is a large number of transponders that may respond to a single interrogation attempt, it is important to have some sort of "anti-collision" hardware or software protocol to assure all transponders report. U.S. Patent 5,489,908 entitled "Apparatus and Methods for Identifying Multiple Transponders," U.S. Patent 5,500,651 entitled "System and Method for Reading Multiple Transponders," and U.S. Patent 5,793,324 entitled "Transponder Signal Collision Avoidance System," all assigned to Texas Instruments provide related information.

### Summary of the Invention

Objects and advantages of the invention will in part be obvious, and will in part appear hereinafter, and will be accomplished by the present invention which provides methods and apparatus for locating an RFID transponder in space. The invention comprises one or more RFID transponders for broadcasting identification data. A plurality of antenna suitable for receiving the identification data which is broadcast by the transponders are associated with support members such as shelves which are positioned at known vertical locations. There is at least one antenna associated with each of the support members or shelves, and there typically may be two or more such antennas arranged side by side on each such shelf or support member. The support members or shelves support products or packages that include or have one of the RFID transponders attached thereto. According to a preferred embodiment, the RFID transponders do not include their own power supply and absorb or store power that is provided by the interrogation antennas. There is also included control circuitry connected to the plurality of antennas for determining which of the antennas receive the identification broadcast data that is broadcast from one or more of the RFID transponders. The transponders usually have rather short broadcast distances so that only those antenna which are within approximately two or three feet of the transponder will receive the identification data. Of course, depending on the application, transponders with shorter or longer range would be appropriate. The control circuit also determines the location of the RFID transponder as a function of the antennas which receive the information data and as a function of the support members or shelves which are associated with receiving the information data. Also, according to a preferred embodiment, the antennas are preferably flat or loop antennas which lie substantially in the plane of the shelf or surface of the support member.

### Brief Description of the Drawings

The above-mentioned features as well as other features of the present invention will be more clearly understood from the consideration of the following description in connection with the accompanying drawings in which:
Figure 1 is a schematic representation of vertical and horizontal spaced antennas for determining the three-dimensional location of an RFID transponder.
Figure 2 is a flow diagram of the method of the present invention.

### Description of Embodiments of the Invention

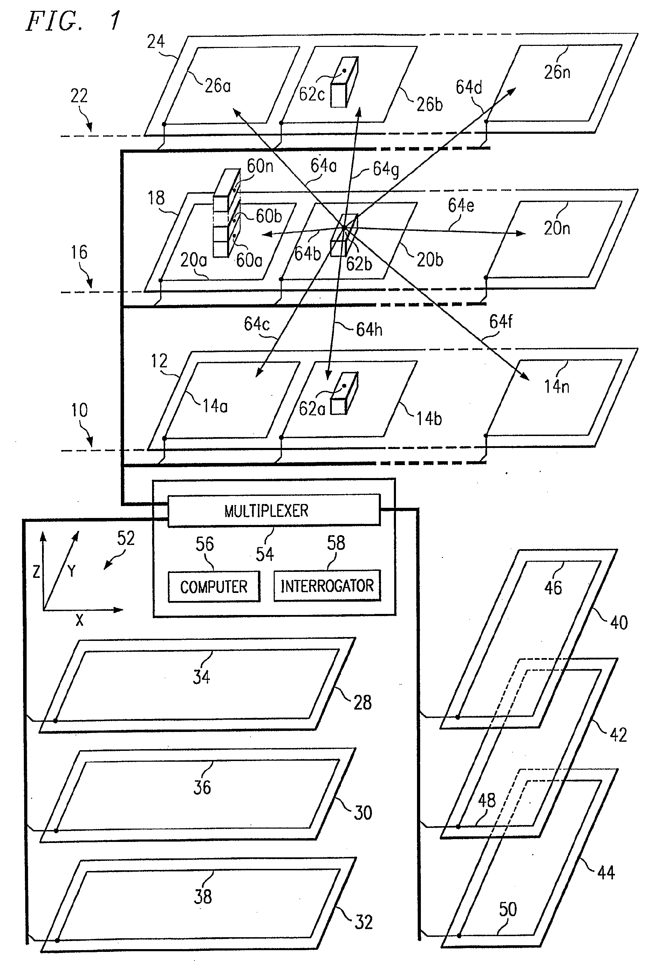

Referring now to Figure 1, there is shown a schematic representation of the apparatus incorporating the features of the present invention. As shown, a bottom row 10 includes a shelf 12 having a series of antennas 14a, 14b - 14n, all mounted side by side such that they are substantially coplanar with shelf 12. Antennas 14a, 14b and 14n, will typically be loop antennas which are attached to the bottom or the top of the shelf 12 such that the loop of the antenna is substantially coplanar with the shelf surface. There is also, a second row 16 having a shelf 18 which also includes a series of side by side loop antennas 20a, 20b - 20n. Likewise, there is a top row 22, including shelf 24 having a series of loop antennas 26a, 26b - 26n. As will be appreciated by those skilled in the art, the series of stacked shelves 10, 16 and 22 may represent storage shelves or even display shelves in a commercial or retail establishment. Shelves 28, 30 and 32 along with loop antennas 34, 36 and 38 illustrate another stacked row of shelves at a different location in the establishment. Likewise, shelves 40, 42 and 44 having loop antennas 46, 48 and 50, respectively, also represent another location of stacked shelves. Diagram 52 in the schematic of Figure 1 illustrates the horizontal dimension X, and the vertical dimension Z. It will also be appreciated by those skilled in the art, it is possible to also include a second horizontal dimension Y according to the teachings of this invention if it would be acceptable for products and shelves to be stacked two deep. That is, at multiple locations along the Y axis. However, for ease of understanding only, the embodiments discussed will assume a multiplicity of antennas in the vertical or Z direction, and a multiplicity of antennas in the X direction. To also include antennas for reading products in the Y dimension, it will be only necessary to add additional antennas in that dimension. Also as is shown, the shelves 10, 16 and 22, as well as the shelves 28, 30, 32, 40, 42 and 44 are all connected to a multiplexing circuit 54 which is in turn connected to a computational circuit 56 and interrogation circuit 58. These circuits comprise the control circuitry for the apparatus.

As was discussed above, each of the shelves has one or more antennae associated therewith. The antennae are typically loop antennas where the plane of the loop coincides with the plane of the shelf. The antennae are suitable for operating with an RFID interrogator, and there will be as many antennae in a specific shelf as the number of locations in the horizontal direction that need to be distinguished. Thus, in the examples given, shelf 18 in middle row 16 contains loop antennas 20a, 20b - 20n. And as will be appreciated, the letter "n" represents any suitable or selected number. As shown, the size and shape of each of the antenna is such that it will approximately cover the required area of each location that is to be identified. Further, in the embodiment shown, each shelf or row has a set of antennas that is similar or matches the sets of antennas in the other shelves or rows. For example, there are antennas 20a and 26a associated with shelves 18 and 24 which match antenna 14a on shelf 12 of bottom row 10. Thus, as will be discussed hereinafter, this arrangement allows any two antennas that are vertically adjacent to be designated as an interrogation pair. Multiplexer 54 operates to select a pair of vertically adjacent antenna such that an RFID interrogation can take place with each of the selected pairs. For example, one selected pair selected by the multiplexer 54 could be antennas 14a and 20a which are located in shelves 12 and 18, respectively. Likewise, another pair of antennas selected by multiplexer 52 may be antenna 20a and antenna 26a located in shelves 18 and 24, respectively. Thus, it is seen that a single antenna may be a member of more than one interrogation pair. As was mentioned heretofore, there may be more than one transponder located in close proximity to each antenna location on a shelf. For example, location of antenna 20a on shelf 18 includes a plurality of products each containing a separate transponder 60a, 60b - 60n. Thus, if antennas 20a and 26a are selected as a pair for interrogating transducers, it will be appreciated that each of the transponders 60a, 60b - 60n may try to respond in which situation computer 56 and interrogator 58 must include some sort of anti-collision protocol. Collision avoidance protocols such as described in U.S. Patents 5,489,908; 5,500,651, and 5,793,324 incorporated herein by reference are well-known in the art and therefore will not be discussed further.

Also as shown, individual transducers 62a, 62b and 62c may be located on single or individual products one to a shelf or one to an antenna location. It will be appreciated that it is often desirable to use transponders with limited range such as about one or two feet or even less to avoid them being read by many of the adjacent antennas. Even so, if a pair of antennas such as antennas 20b and 26b are selected to read as an interrogation pair, it will be appreciated that these two antennae will certainly read transponders 62b and 62c. Transponder 62b is almost directly in contact with antenna 20b and transponder 62c is almost in contact with antenna 26b. Likewise, if antenna pairs 14b and 20b are selected, the two antennas making up this pair will certainly read transponder 62a and 62b. Further, as mentioned, it may be desirable that the RFID transponder be selected or tuned to have a short enough reading range so they will not be read except by two or three of the closest antennas. However, this is not always possible and sometimes conditions will be such that a large number of surrounding antennas may read a single transponder. For example, in the embodiment shown, transponder 62b is indicated by radiation lines 64a - 64g as having sufficient transmission power to be read by at least nine separate antennas. Thus, it will be appreciated that if a single transponder or the package

to which the transponder is attached is to be located by the control circuitry with respect to its vertical and horizontal position on a shelf, it can only be assumed that the transponder is located on one of the nine shelves. Consequently, there must be some protocol available for determining the location of the particular transponder in view of the multiplicity of readings. A suitable protocol or algorithm for determining this is discussed hereinafter.

From the embodiment illustrated in Figure 1, it can also be seen that there may be a single antenna for each shelf as shown with respect to shelves 28, 30 and 32. Such an arrangement would be perfectly satisfactory for large items which can not include two products side by side on a single shelf. It should also be appreciated that the arrangement of shelves and antennas offers many choices depending upon the particular use and size of the products being stocked.

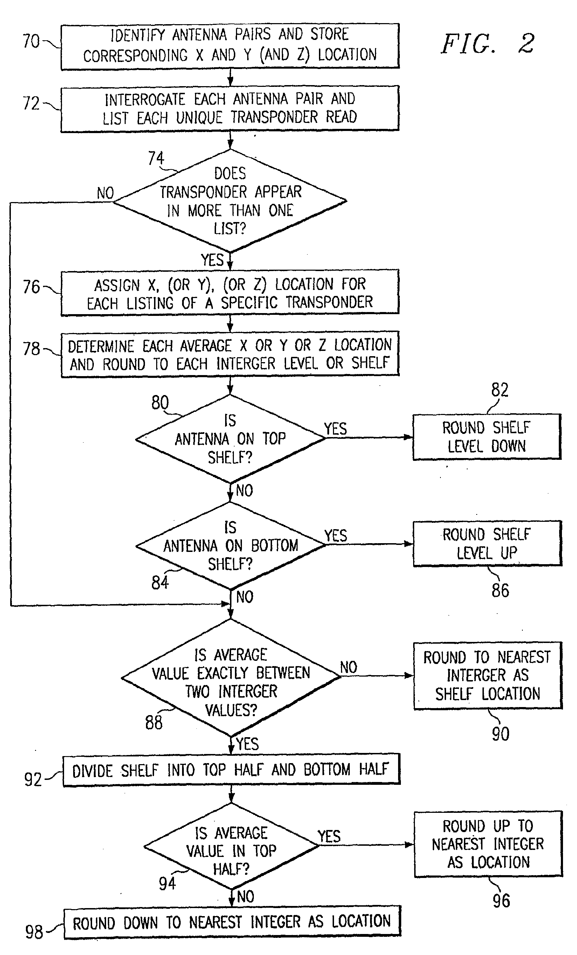

As was discussed above, it is desirable to have a protocol or algorithm whereby computer circuitry 56 can more precisely identify the location of each transducer. Thus, referring now to Figure 2, there is shown a flow diagram suitable for determining the location of a transducer even if multiple antennas read the same transducer. As shown, there is a first step or block 70 wherein the various antenna pairs are identified and have their locations stored at known X (horizontal) and Z (vertical) locations. It is noted, as discussed above, for more complex systems, there could also be included a Y location storage. Then at step 72, each antenna pair is used to interrogate transponders within reading range and will list each unique transponder read by that antenna pair. As shown in step 74, the algorithm will then determine whether or not more than one transponder appears with respect to more than one pair of antennae. If the answer is NO, then the location both vertical and horizontal of the antennas which read the specific transponder, represents the closest location of the interrogated transponder, and the algorithm skips to step 88. However, as discussed, the answer will usually be YES, there is more than one pair of antennae or list upon which a transponder appears. Therefore, the program proceeds to step 76, which assigns the X and Y location values of the antenna reading the transponder. This is done for each listing of a specific transponder. Then as shown at step 78, the average X and Y values of all of the antennae reading a specific transponder are determined. The algorithm then progresses to step 80, wherein a determination is made as to whether or not the antenna which read the transponder is on the top shelf. If the answer is YES, the location of the average shelf location of the transponder is rounded down to the next lower shelf. However, if the answer is NO, the question is asked at step 84 whether or not the antenna is on a bottom shelf. In the case where the answer is YES, the location is rounded up to the shelf above the bottom shelf. However, if the answer is NO, then the program progresses to step 88 which determines if the average value is exactly between two integral values. If the answer to the determination of step 88 is NO, then the location of the read transponder is rounded up or down to the closest value as the location as shown at 90. On the other hand, if the answer is YES, then the location of the shelf is considered to be divided in a top half and a bottom half as indicated at step 92. The program then progresses to step 94 wherein there is a determination made as to whether or not the average location is in the top half of the divided shelf. If so, the value of the shelf is rounded up as the location as indicated at 96. Whereas, if the answer is NO, the shelf is rounded down to the lower location as indicated at 98.

Thus, there has been described a method for determining the location of a transponder that will yield a matrix of interrogation results in which each antenna element represents a location in the shelf in both horizontal and vertical directions. A list is completed for every element or antenna which includes unique transponder numbers (ID's) that resulted from the interrogation that takes place with each antenna pair belonging to that location. Since It is possible that a specific identification number can appear in more than one list, the above-described algorithm determines the most likely real location of each transponder according to its identification number. It will also be appreciated that the same procedure can be used for determining the horizontal location by averaging the horizontal values of each of the antenna on a shelf.

## Claims

1. Apparatus for locating an RFID transponder comprising:
a plurality of antennae for recovering identification data broadcast by said RFID transponder;
a plurality of support members at spaced apart vertical locations suitable for supporting said RFID transponder, each of said spaced apart support members associated with at least one of said plurality of antennae; and
control circuitry connected to said plurality of antennae for determining which of said plurality of antennae receives said identification data broadcast from said RFID transponder and for determining the location of said RFID transponder as a function of the antennae receiving said broadcast data and the support members associated with the antennae receiving said identification data.

2. Apparatus according to claim 1 further comprising said RFID transponder for broadcasting said identification data.

3. Apparatus according to claim 1 or claim 2 wherein at least two said transponders broadcast separate identification data.

4. Apparatus according to any one of the preceding claims wherein said antennae are loop antennae and the plane of the loop of the antenna is substantially coplanar with said support member.

5. Apparatus according to any one of the preceding claims wherein each of said support members includes at least two antennae located side by side, and wherein both the vertical and horizontal location of the transponder is determined.

6. Apparatus according to any one of the preceding claims wherein said support members at known vertical locations are a plurality of shelves stacked vertically.

7. Apparatus according to claim 6 wherein each of said shelves has two or more horizontal locations for supporting products or packages to which a transponder is attached, each shelf has an antenna corresponding to said each of said horizontal locations, and wherein both the vertical and horizontal location of the transponder is determined.

8. Apparatus according to any one of the preceding claims further including a multiplexer connected between said control circuitry and said plurality of antennae for selecting a pair of adjacent antennae.

9. Apparatus according to any one of the preceding claims further comprising computer circuitry for averaging the vertical location of antennae reading said transponder.

10. Apparatus according to any one of claims 2 to 9 wherein said RFID transponders are attached to a product or package.

11. Apparatus according to any one of claims 2 to 10 further comprising a multiplicity of products or packages and a multiplicity of RFID transponders, each transponder broadcasting different identification data and at least one transponder being associated with each of said multiplicity of products or packages.

12. Apparatus according to any one of claims 2 to 11 wherein said RFID transponders store power transmitted by one or more of said antennae for use to provide said transmitted identification data.

13. A method of locating an RFID transponder in space comprising the steps of:
broadcasting identification data from an RFID transponder;
receiving said broadcast identification data at a plurality of antennae;
providing a plurality of spaced apart support members at known vertical locations suitable for supporting said RFID transponders, and each of said spaced apart support members associated with at least one of said plurality of antennae;
determining which antennae receive identification data broadcast from said RFID transponder; and
determining the three-dimensional location of said transponder broadcasting said identification data as a function of the antennae receiving said information data and the support members associated with the antennae receiving said identification data.
